# EUROPEAN PATENT APPLICATION

(11) **EP 2 373 044 A1**
(43) Date of publication of application: **05.10.2011**
(21) Application number: 10015045.7
(22) Date of filing: 26.11.2010
(51) Int. Cl.: H04N 13/00

(54) **Stereoscopic image display device**

(30) Priority: 31.03.2010 JP 2010080128
(71) Applicant: Hitachi Consumer Electronics Co. Ltd., Tokyo 100-0004 (JP)
(72) Inventor: Ishihara, Tomokazu, Tokyo 100-8220 (JP); Okada, Mitsuhiro, Tokyo 100-8220 (JP); Yatabe, Yusuke, Tokyo 100-8220 (JP); Komi, Hironori, Tokyo 100-8220 (JP)
(74) Representative: Strehl Schübel-Hopf & Partner

(57) **Abstract**

A stereoscopic image display device, for outputting left and right two (2) pieces of output videos, by superimposing an OSD (On Screen Display) on left and right two (2) pieces of output images, comprises: a disparity correction portion for correcting disparity of the input images, thereby outputting corrected images; and an OSD superimpose for superimposing the OSD on each of the corrected image, thereby outputting output images, wherein correction is made in such that the disparity of the corrected images in jumping out direction comes to be small, when displaying the OSD, and thereby lightening visual fatigue due to the fact that an object on the input image is seen in front than the OSD.

## Description

The present invention relates to a stereoscopic image display device.

As the background technology in the present technical field is already known, for example, Japanese Patent Laying-Open No. Hei 11-187426 (Patent Document 1). In that publication is described the followings: "[Problem to be Dissolved] It is possible to display, not only stereoscopic image, but also a plane picture (e.g., 2-D video) in stereoscopic manner, and also to display plural numbers of videos, by synthesizing those with shifting the respective positions in the stereoscopic directions, and in particular, it is to reduce a sense of fatigue of an observer by obtaining video widening into the depth direction on a display screen. [Dissolving Means] The plane (2-D) video inputted is divided into one for use of the right-side eye and other for use of the left-side eye, and a right-side eye delaying means 3a delays the video for right-side eye by a predetermined amount + Δ in the same direction of one (1) horizontal scanning line, thereby shifting the picture to the right. A left-side eye delaying means 3b delays the video for left-side eye by a predetermined amount - Δ in the direction opposite to the one (1) horizontal scanning line, thereby shifting the picture to the left. An object locating at a long distance is separated by 2Δ when superimposing both pictures, and thereby a sense of stereoscopic can be obtained, drawing back from a display screen or surface of a display means 5. Plural numbers of signals are inputted, and when different delaying processes are treated on respective ones and a synthesizing process is treated on them, there can be obtained the stereoscopic image, positioning at a front of the display surface, on the display surface and at a rear of the display surface." (in the Abstract thereof)

### BRIEF SUMMARY OF THE INVENTION

With an device for displaying the stereoscopic image on a liquid crystal display, a screen or a CRT, for causing an observer to have a sense of depth on an object presented within the video, there is a method of generating disparity on the video reflected on the right and left eyes, in the horizontal direction (e.g., pupil distance). As a way of generating the disparity, there is already known "binocular (stereoscopic) vision in a jumping out direction", i.e., causing the observer to have a sense that as if the object lies in a position nearer to her/him than the display surface, or "binocular (stereoscopic) vision in a draw-back direction", i.e., causing the observer to have a sense that as if the object lies in a position far from her/him than the display surface. Or, if not generating the disparity, the object is sensed to lie on the display surface. With either one of the disparity of, i.e., the jumping out direction or the drawing back direction, it can be sensed that, the larger an amount of disparity, the farther from the display surface.

On a television and/or a recorder, there is already known a display method, i.e., so-called OSD (On Screen Display), displaying characters and/or pictures superimposing the video inputted, when displaying a menu screen, captions and/or graphics on the display screen. This is achieved by replacing pixel values of a specific area of the video inputted with the pixel values of the character or the picture to be displayed as OSD, to be displayed.

In the similar manner to that of displaying the flat OSD of a plane (e.g., 2-D) image with superimposing thereon, also in the case of the stereoscopic image, there can be considered a display method corresponding to OSD in the case of the plane (e.g., 2-D). On the OSD in case of the stereoscopic image, the captions or the pictures are overlaid or superimposed on the input video as OSD, so as to be displayed in a front than the stereoscopic image, which is drawn within the input video. If superimposing the OSD to be displayed at the same position on the video to be displayed on both the left and the right, for example, no disparity is generated on the OSD, an then the OSD is sensed to lie on the display surface. In that case, if a cubic in the jumping out direction lies on the input video, and if the OSD is superimposed on a part of the cubic, then inherently, the part of the cubic is hidden, which should be in a front than the OSD, and it cannot be seen; i.e., having a problem that a visual contradiction or conflict is generated. As a result thereof, there may be generated a visual fatigue for the observer.

With the method of the Patent Document 1, there is no description about the relationship between the disparity of the stereoscopic image and the disparity of a plane to be superimposed, then depending on the contents, an amount or volume of jumping out the picture inputted comes to be larger than that of jumping out the OSD; therefore, there is a concern that the visual conflict is generated frequently.

The problem to be solved is to reduce the frequency of generating the visual contradiction, i.e., the object on the input video lies in front rather than the OSD, within the video display device for outputting the stereoscopic image.

According to the present invention, for accomplishing the object mentioned above, there is provided a stereoscopic image display device, as is described in the pending claims.

With the present invention mentioned above, the frequency of generating the visual contradiction, that an object on the input video can be seen, is reduced.

### BRIEF DESCRIPTION OF THE SEVERAL VIEWS OF THE DRAWING

Those and other objects, features and advantages of the present invention will become more readily apparent from the following detailed description when taken in conjunction with the accompanying drawings wherein:
Fig. 1 is a block diagram for showing the structures of a stereoscopic image display device (an embodiment 1), according to the present invention;
Figs. 2A and 2B are views for explaining a correction obtained by shrinkage (the embodiment 1);
Figs. 3A and 3B are views for explaining the correction obtained by parallel shift (the embodiment 1);
Figs. 4A and 4B are views for explaining the correction obtained by using a flat image (the embodiment 1);
Figs. 5A to 5C are explanatory views for showing images of an input image, a corrected image and an output image, respectively;
Fig. 6 is a flowchart for showing operations of the stereoscopic image display device (the embodiment 1);
Fig. 7 is a block diagram for showing the structures of a video recorder (an embodiment 2);
Fig. 8 is a block diagram for showing the structures of a television receiver (an embodiment 3);
Fig. 9 is a block diagram for showing the correction by the flat image (the embodiment 1);
Fig. 10 is a block diagram for showing the structures when combining with a correction method therein (the embodiment 1); and
Fig. 11 is a block diagram for showing the structures for obtaining an input maximum disparity signal through analysis of the input images (the embodiment 1).

### DETAILED DESCRIPTION OF THE PREFERRED EMBODIMENTS

### <Embodiment 1>

Hereinafter, embodiments according to the present invention will be fully explained by referring to the attached drawings.

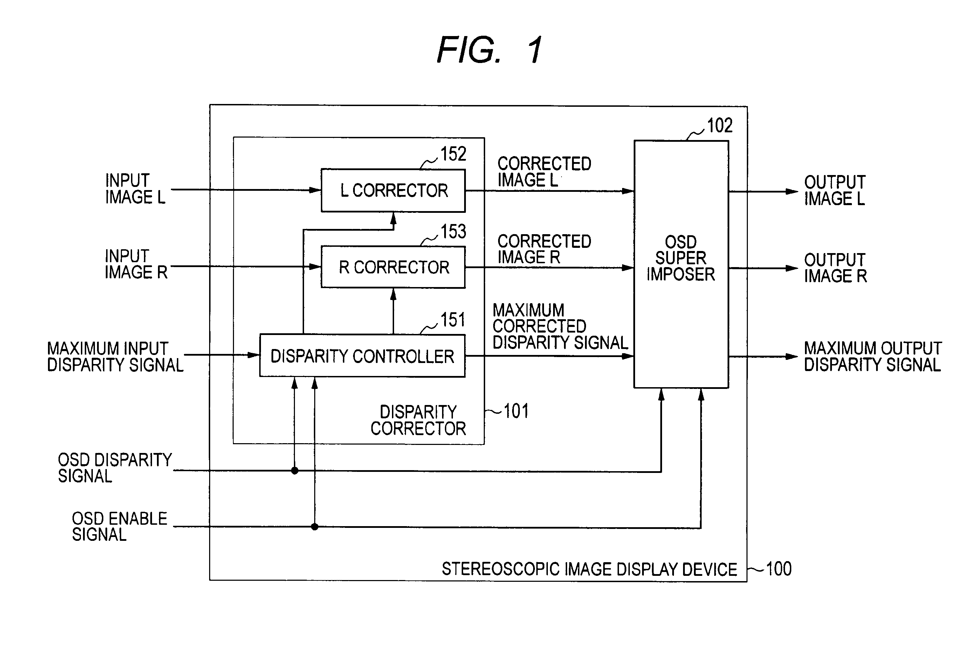

Fig. 1 is a block diagram for showing the structures of a stereoscopic image display device, according to a first embodiment of the present invention.

A stereoscopic image, which is treated within the present embodiment, is a video or picture for use in a stereoscopic image display with using a stereoscopy, and it is constructed with two (2) pieces of input videos or pictures. When a person views the stereoscopic image, two (2) pieces of input videos are displayed on an device for displaying the stereoscopic images thereon, such as, a display or a screen, etc., for example, at the same position, alternately, so that one of the input videos or images can be observed only by a left-side eye of a observer and the other thereof can be observed by only a right-side eye of the observer, for example, through a method of observing the images through a pair of shutter glasses, which are in synchronism with timing of the device thereof for displaying the videos. The device shown in Fig. 1 is able to execute a control of disparity and superimposing of the OSD upon the input video, thereby to output it.

The entire structures of the stereoscopic image display device are shown by a reference numeral 100. The stereoscopic image display device is constructed with a disparity corrector 101 and an OSD superimposer. The disparity corrector is constructed with a disparity controller 151 an L-corrector 152 and an R-corrector 153.

Explanation will be made on a flow of signals within the stereoscopic image display device. An input image L and an input image R, building up a stereoscopic image, are inputted into the disparity controller portion, wherein the disparities are corrected with the method, which will be mentioned later, and a corrected image L and a corrected image R are outputted therefrom. When correcting the disparity, the disparity controller determines a correction method and a correction amount of the disparity when correcting the input image, upon basis of the maximum disparity signals of an OSD display signal, an OSD disparity signal and an input image. Explanation about a method for correcting the disparity and a method for determining the correction amount will be made later.

Explanation will be about the disparity corrector. The L-corrector conducts a video processing on an intermediate image L, upon basis of the correction method and the correction volume, which are determined within the disparity controller, and thereby outputs the corrected image L. The R-corrector conducts video processing on an intermediate image R, upon basis of the correction method and the correction volume, which are determined within the disparity controller, and thereby outputs the corrected image R. With using the L-corrector and the R-corrector, it is possible to execute the video processing on the left and the right video, respectively, and as a result thereof, it is possible to adjust the disparity of the images inputted.

Within the OSD superimposer, characters and/or pictures, etc., are overlaid or superimposed in a part of the corrected image L and the corrected image R, respectively, and are outputted as an output image L and an output image R.

The OSD superimposer overlays or superimposes the flat OSD onto the corrected images L and R, and output the output images L and R. By means of the OSD superimposer, it is possible to overlay or superimpose a menu screen and/or captions having an arbitrary disparity, or a graphic (CG) produced by a computer, etc., onto the corrected images L and R. The OSD is superimposed when the OSD display signal comes to be a value of meaning "ON", while it is not superimposed when the OSD display signal comes to be a value of meaning "OFF". For example, the OSD display signal can be defined by a signal of 1 bit, and wherein it can be determined that "1" means "ON" and "0" means "OFF". The amounts or volumes of the disparity, which are applied onto the output image L and the output image R, are determined on the OSD disparity signal, which is applied from an outside of the stereoscopic image display device and the correction maximum disparity signal, which is applied from the disparity controller.

Explanation will be given on in more details of the method for correcting the disparity, within the disparity corrector, and also the principle for reducing the disparity in the jumping out direction by that method.

As the detailed method for correcting the disparity of video within the disparity corrector, according to the present embodiment, there will be explained about three (3) methods, i.e., [A] a correction method by parallel shift, [B] a correction by shrinkage, and [C] a correction method by using a flat image therein. Those three (3) methods may be applied, independently, or may be applied in combination with, by taking effects/ill influences of correction of the disparity into the consideration thereof. For example, for the purpose of brining the disparity in the jumping out direction of the input video to be small, there are two (2) ways; i.e., a way of combining of conducting parallel shifting thereon after shrinkage of the input image, and a way of combining of conducting parallel shifting on a flat image, which is produced by a plane selector. In case of combining the methods, there can be obtained effects by combining the respective correction effects by each. Hereinafter, explanation will be made about the methods [A], [B] and [C].

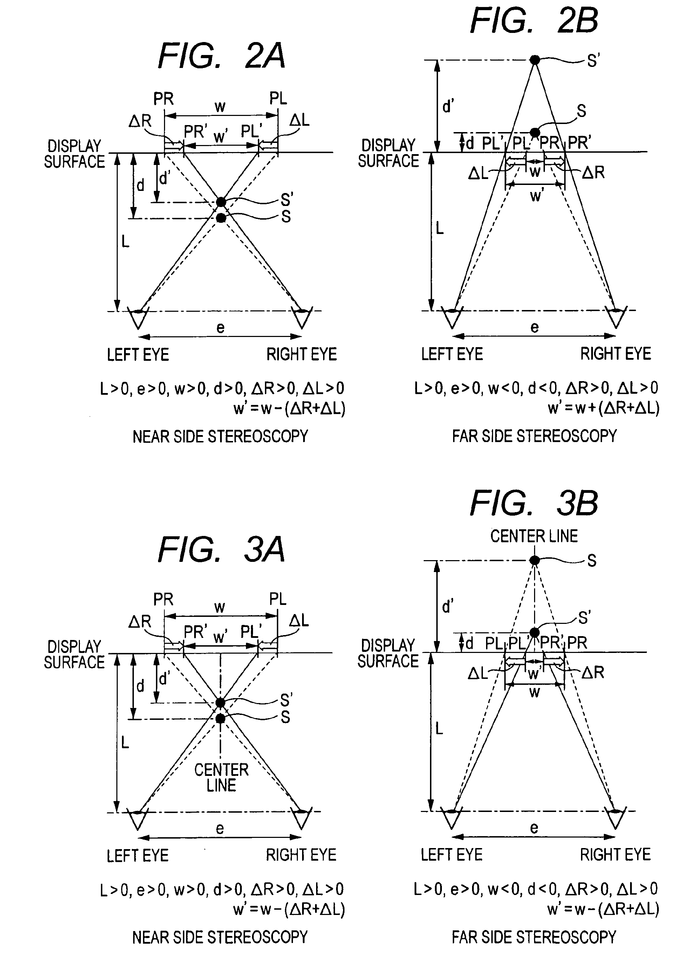

Figs. 2A and 2B are views for explaining the principle of the way [A].

Explanation will be made on the meanings of marks within Figs. 2A and 2B. Those figures depicts the state that an observer watches the device from a front surface thereof while displaying the input image L for the left-side eye and the input image R for the right-side eye on that device, which can display the stereoscopic image with using the stereoscopy. The surface, on which the input image is displayed, is called by a display surface. The input image L and the input image R are displayed on the display surface at the same position. For example, while displaying the images on that device, alternately, so that the input image L can be seen only on the left-side eye while the input image R can be seen only on the right-side eye, with a method of using a pair of shutter glasses, for example; thus, it is assumed that, for the observer, the input images can be recognized in a stereoscopic manner, in accordance with the stereoscopy.

It is assumed that a distance between the left-side eye and the right-side eye of the observer is "e" (e>0), and that a distance between the observer and the display surface is "L" (L>0). And, it is also assumed that a bright point "PL", displaying a certain pixel on the input video L before correction, and a bright point "PR", displaying a certain pixel on the input video R on the display, are formed as images, at the same point (a point image) "S" on a stereoscopic space, and that they are recognized as a part of the stereoscopic image by the observer. In this instance, it is assumed that a distance "w" between "PR" and "PL" on the display surface is called by "disparity". The distance "w" is defined to be positive when "PR" lies on the left side than "PL" judging from the observer, and is zero "0" when the positions of "PR" and "PL" are at the same position on the display, and further the distance is defined to be negative when "PR" is on the right side than "PL" judging from the observer.

When w=0, the point image "S" is formed at the same position on the display surface, then for the observer it can be sensed to be a point laying on the display. When w>0, the point image "S" is formed on a side in front than the display, and then it can be sensed to be a point having depth in the jumping out direction (i.e., near side stereoscopy). When w<0, the point image "S" is formed on a depth side than the display, and then it can be sensed to be a point having depth in the drawing back direction for the observer(i.e., far side stereoscopy). Also, a distance between the point image "S" and the display is defined as an amount or volume of jumping out "d". When w>0, d>0, while when w<0, then d<0.

Next, it is assumed that the correction image L and the correction image R are obtained by conducting the correction within the disparity corrector. With this video processing, the position to which the point image "S" should be shifted is described by "S"'. In the similar manner, the bright points after correction are described by "PL"' and "PR"', the jumping out volume after correction by "d"', and the disparity after correction by "w"', respectively. However, herein, the explanation was given on the certain point image "S". By the correction are influenced all of the bright points on the input videos, in the similar manner.

Explanation will be made about the correction method with parallel shift by referring to Figs. 2A and 2B. Fig. 2A shows a result of a case of applying the method [A] on a solid body of the jumping out direction (near side stereoscopy), while Fig. 2B shows a result of a case of applying the method [A] on a solid body of the drawing back direction (far side stereoscopy).

With the method [A], the input image L, after being shifted to the left-hand side by "ΔL" (ΔL>0) within the L-corrector, is outputted as the corrected image L, and in the similar manner, the input image R, after being shifted to the right-hand side by "ΔR" (ΔR>0) within the R-corrector, is outputted as the corrected image R.

In Fig. 2A, with application of the method [A], the disparity is reduced down to w'=w-(ΔR+ΔL). With the jumping out volume "d"' of the point image "S"' in this instance, a relationship d'<d can be established. In the similar manner, when applying the method [A] into Fig. 2B, d'>d. Thus, with the method [A], both the solid bodies of jumping out direction/drawing back direction (near side stereoscopy), every point image can be sensed to move in the drawing back direction. In this manner, with applying the method [A], it is possible to execute the correction for reducing the disparity "w" in the jumping out direction (far side stereoscopy).

However, if setting (ΔR+ΔL) to be large too much, a magnitude |-w'| of the disparity between the bright points "PR"' and "PL"' comes close to "e", in the stereoscopy in the drawing back direction shown in Fig. 2B, thee is generated a visual fatigue because of excess of a region of disparity, within which the stereoscopic image can be observed comfortably, or generated an ill effect that it cannot be formed as an image on the eyes of the observer, thereby disabling observation as the solid body, etc. For the purpose of enlarging an amount of correction, it is preferable to combine this method with the method [B], etc.

Explanation will be given about the [B] correction by shrinkage, by referring to Figs. 3A and 3B. Meanings of the marks are same to those in Figs. 2A and 2B. Fig. 3A shows a result when applying the method [B] onto the solid body of the jumping out direction (near side stereoscopy), while Fig. 3B shows a result when applying the method [B] onto the solid body of the drawing back direction (far side stereoscopy). With the method [B], the image, obtained by shrinking the horizontal direction of the input image L down to "w'/w" within the L-corrector, is outputted, as the corrected image L, and in the similar manner, the image, obtained by shrinking the horizontal direction of the input image R down to "w'/w" within the R-corrector, is outputted, as the corrected image R, respectively.

In Fig. 3A, the disparity of the point image "S" comes to w'=w-(ΔR+ΔL). In the similar manner, in Fig. 3B, the disparity of the point image "S" comes to w'=w+(ΔR+ΔL). Thus, with the method [B], the point image "S" can be sensed to come close to the display surface, on both the solid bodies of the jumping out direction and the drawing back direction.

As shown in Figs. 3A and 3B, when shrinking the corrected images L and R in the horizontal direction thereof, an attention is made in such that no change is made on the position of a central line. i.e., a line connecting between the centers, in the horizontal direction on the images.

With the vertical direction, there are methods, such as, a method of shrinking it down at the same ratio to the horizontal direction, a method of lowering the shrink ratio (w'/w) than that in the horizontal direction, and a method of conducting no shrinkage. When shrinking the vertical/horizontal directions at the same ratio, it is possible to maintain an aspect ratio of the video. With the method of increasing the shrink ratio in the vertical direction than that in the horizontal direction, or with the method of conducting no shrinkage, comparing to the case when shrinking at the same ratio in the vertical/horizontal directions, it is possible to enlarge an area further, on the display surface, on which the video can be displayed.

With the method [B], for the purpose of enlarging the correction amount (d-d') of the stereoscopy in the jumping out direction, it is enough to make a value of the shrink ratio (w'/w) small, but of course, the area for displaying the video thereon comes to be small. If there is a necessity of displaying the input image on a large area, even during when displaying the OSD, it is preferable to increase the correction amount of the images corrected by the method [B], totally, in combination with, such as, correcting further by the method [A], etc.

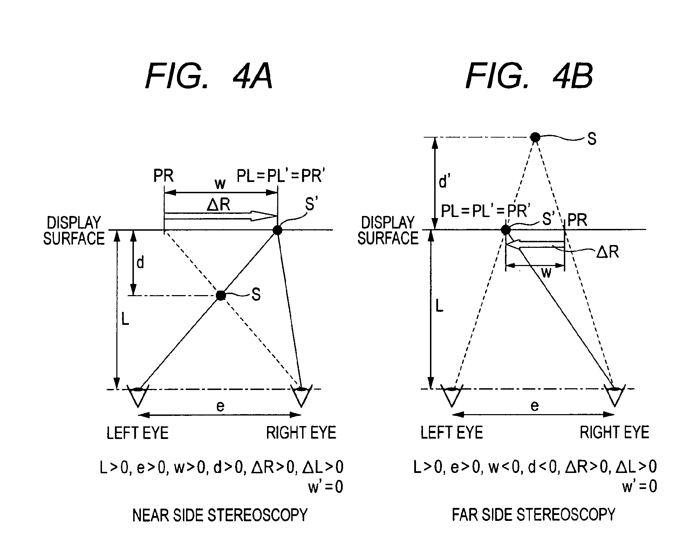

Figs. 4A and 4B are explanatory views for showing the [C] correction method with using a flat image therein. Meanings of the marks are same to those in Figs. 2A and 2B. With the method [C], while using the input images L and R, one (1) piece of flat image is produced, and also a same flat image is outputted, as both, the corrected images L and R. As a method for producing the flat image, in more details thereof, there are several methods; e.g., a method of using either one of the input images L or R, as the flat image, and a method of creating out one (1) piece of image through the morphing technology with using the input image L and the input image R, etc.

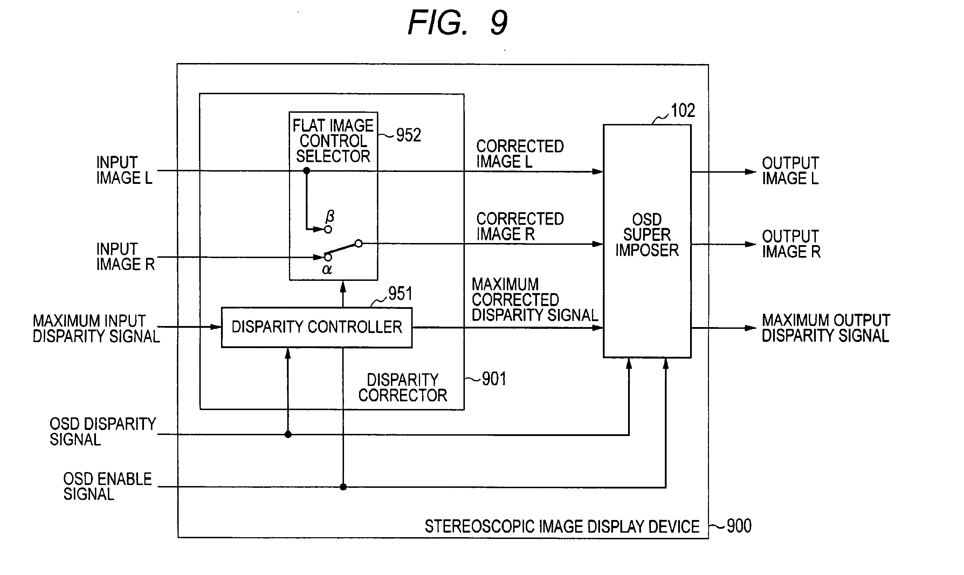

Structures for executing the correction of the method [C] are shown in Fig. 9. A plane control selector 952 is a selector for executing the correction according to the method [C]. In case where no plane video is produced, by means of the plane control selector, the plane control selector is connected on (α) side in Fig. 9, on the other hand in case where the plane video is produced, it is connected on (β) side. When it is connected on the (β) side, it outputs the same video to both, intermediate images L and R, thereby enabling to correct the disparity at all of the points, which are included in the intermediate images.

By outputting the same videos to both the corrected images L and R, all of the disparities "w" on the input image are w=0. Thus, all of the point images, which are made up with the corrected images L and R, are formed on the display surface.

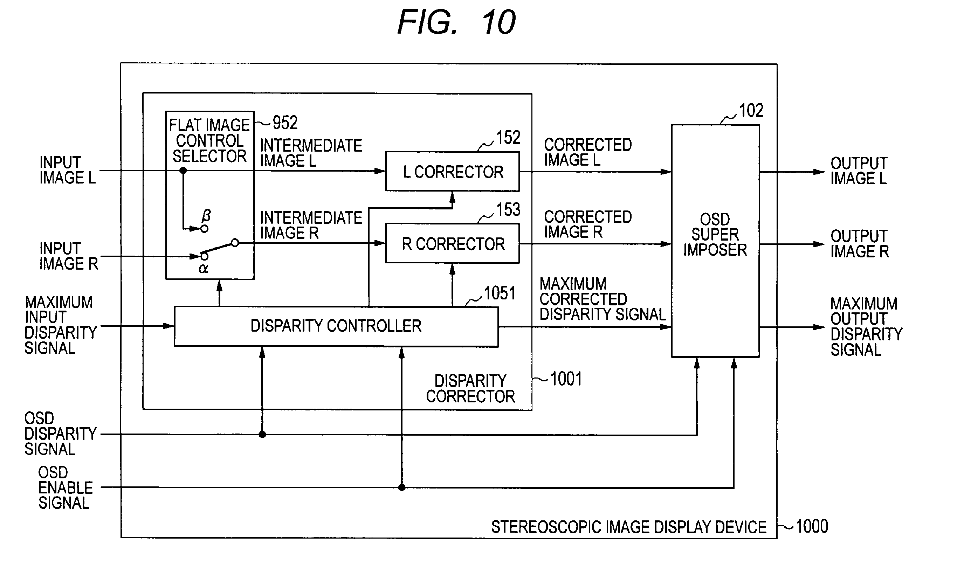

Also, there is a method of conducting such a display of obtaining a horizontal image size, being large at a certain degree, within a range of the disparity, in which always it can be viewed comfortably, with applying the method [A] or [B] when the correction volume is less than a constant value, and by changing into the method [C] when the correction volume is larger than the constant value. For the purpose of conducting the control on the disparity, adaptively, depending on such correction amount, the structure shown in Fig. 10 is adopted.

As was mentioned above, with the correction in the disparity correction portion, it is possible to reduce the disparity of the stereoscopic image inputted. Thus, the solid body of the jumping out direction on the input image can be shifted into the direction separating from the observer.

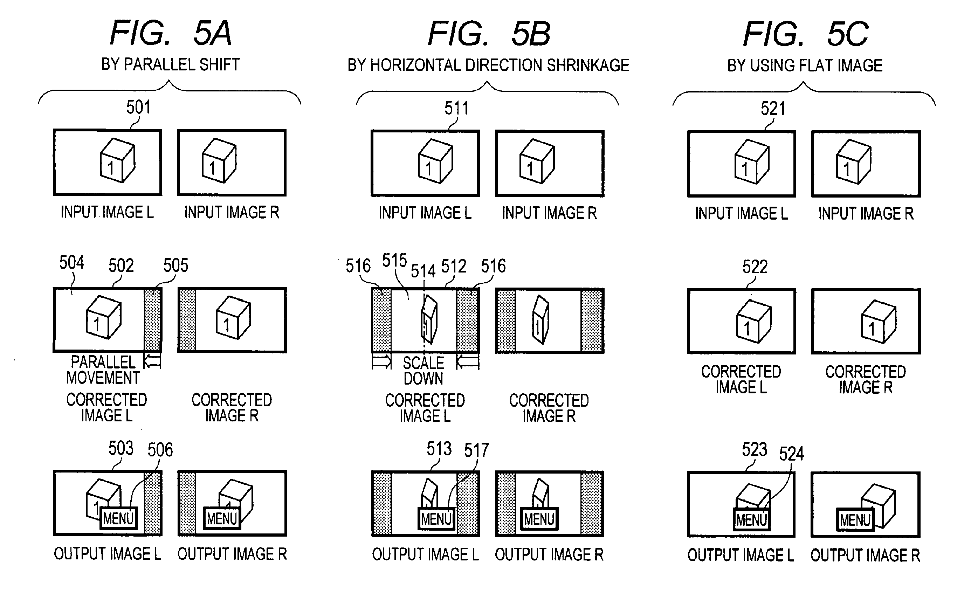

Explanation will be given on a result of conducting the correction within the disparity corrector and the OSD superimposer. Figs. 5A to 5C show screen images when applying the methods [A] to [C] as the correction method, respectively.

In Fig. 5A is shown an image of the video when conducting the correction thereon, in accordance with the method [A]. The left-hand side of a corrected image L 502 is a region where an input image L 501 is shifted in parallel to the left to be disposed. Video data, being on the input image, but of a region coming out into an outside of the screen through parallel shifting on the corrected image, is not used. A region 505 other than where the input images are disposed is filled up with a pattern, being visually unremarkable, such as, a black color, a gray color, or a specific pattern, etc., so that it does not obstacle or disturb by the observer. The output image L is the image, which is obtained by superimposing the OSD 506 on the corrected image L with a method, the details of which will be shown later. Also, with the input image R and the output image R, the direction of the parallel shifting thereof is on the right-hand side, and the images are outputted after being conducted with the similar processing thereon, but other than that the position of superimposing the OSD is on the L side differing from.

Fig. 5B shows a video image when conducting the correction in accordance with the method [B]. A region 516 other than that where the input images are disposed is filled with the black, the gray or the specific pattern, in the similar manner to that in case of the method [A]. In Fig. 5B, though illustrating the case where the shrinkage is made only in the horizontal direction, but actually, the shrinkage may be made in the vertical direction at the same time. When the conduction ratios are determined to be same in the vertical direction and the horizontal direction, there can be obtained a merit that the shrinkage can be made while fixing an aspect ratio, and when not shrinking in the vertical direction, there can be obtained a merit that an area occupied by the input image comes to be large on the out image.

Fig. 5C shows a video image when conducting the correction in accordance with the method [C]. With the method [C], the disparity of the corrected image is made zero (0) by outputting the same image to both the corrected images L and R. In this instance, with provision of the disparity in the jumping out direction on the OSD, it can be seen that the OSD is displayed in front than the flat image. Also, without provision on the OSD, both the flat image and the OSD can be formed on the display surface, thereby enabling so-called 2-D display.

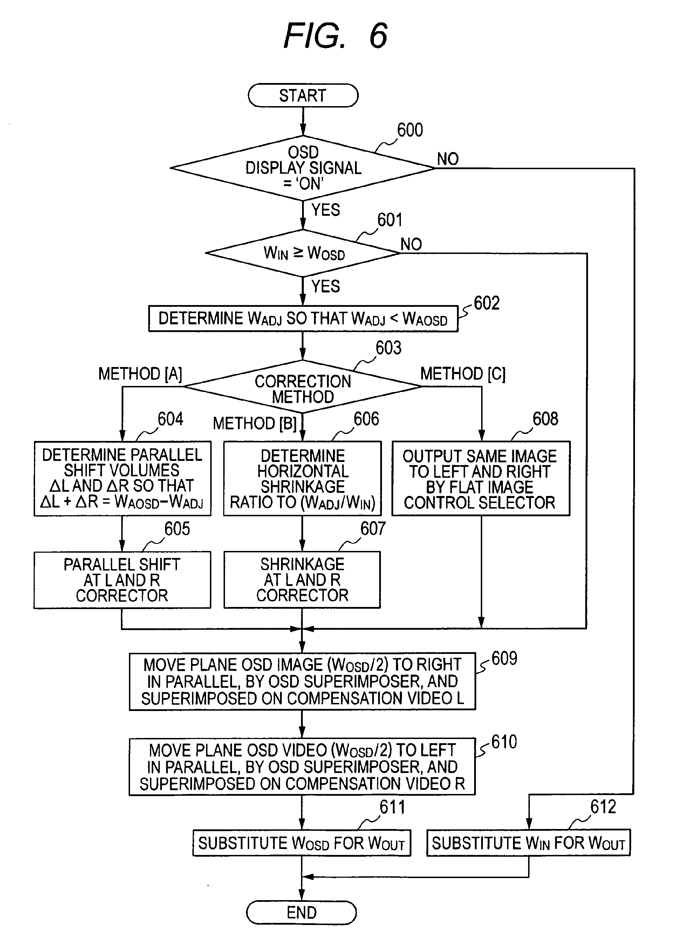

Fig. 6 is a flowchart for showing a flow of operations of the stereoscopic image display device. The correction method and the correction volume are determined, as is shown in this flowchart.

"WIN" is an input maximum disparity signal, i.e., a signal defining the maximum disparities in the jumping out direction of the input images L and R. In relation to the flow shown in Fig. 6, it is assumed that a value of disparity presents the jumping out direction by a positive value while the drawing back direction by a negative value. With a video source, such as, an optical disc medium recording the stereoscopic image thereon and/or a radio wave, etc., there are cases where a signal defining the disparity of an input image is given accompanying with the input image. The purpose of giving such signal is to adjust the disparity depending on the visual condition, such as, the position of a visual point of the observer, an inch size of the display, etc., for example.

The disparity signal is defined, respectively, by a screen area, such as, a unit of a pixel/area/screen as a whole, etc., for example, or by a time unit, such as, by each (1) frame/by plural frames/video as a whole, etc., and by the jumping out direction (the maximum disparity signal)/the drawing back direction (the minimum disparity signal). In accordance with the present embodiment, the maximum value is obtained, in relation to the disparity in the jumping out direction, at least during a period of one (1) frame or more than that, from the disparity given, and defines it as the maximum disparity signal "WIN".

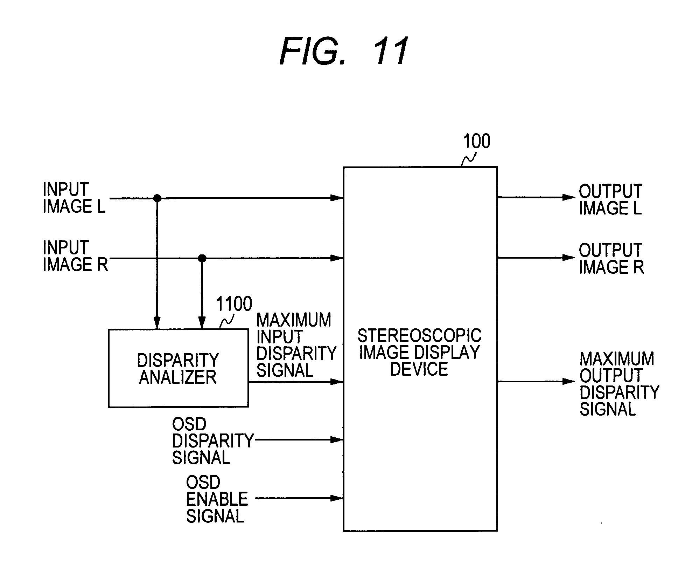

If no disparity is provided as the information accompanying with the input image, "WIN" is obtained through analysis of the input image and so on, or a fixed value is used as "WIN", which is determined in advance. Fig. 11 shows the structures when obtaining "WIN" by analyzing the input images and so on. A disparity analysis portion 1100 in Fig. 11 presumes the maximum disparity from the input image L and the input image R, and outputs it as the input maximum disparity signal. With applying the structures shown in Fig. 11, it is possible to suppress the frequency of generating the visual conflict, due to existence of the object on the input image in front than the OSD, to be low, even in case where no the maximum disparity value is given, as the information accompanying with the input image.

Explanation will be given about the setting of a display period of OSD and an amount or volume jumping out from the display surface. The OSD is displayed during only the period when the OSD display signal becomes "1". The signal, indicating the disparity to be attached on the OSD, i.e., the OSD disparity signal is indicated by "WOSD". A value of "WOSD" may be selected from selections, large, middle, small or the like, by a user on the menu screen, etc., or may be determined by a method of using a fixed value, which is determined in advance. The value of "WOSD" may be a positive, zero (0), or a negative. A case where it is the negative presents that the OSD lies in the drawing back direction than the display. If the disparity is too much, there are cases where the visual fatigue can generate, easily, when observing the stereoscopic image, and where no image can be formed. Then, with determining a fusion limit "f", attention will be paid that the value of disparity does not come to be larger than that. Thus, paying attention to satisfy WOSD<f, when determining "WOSD".

In case where WIN>WOSD, when displaying the OSD, a part of the stereoscopic image can be sensed, as if it is in front than the OSD; thereby generating the visual conflict. Then for the purpose of protecting from the visual conflict, the correction is so made that the maximum disparity comes to WADJ (WADJ<WIN, WADJ<WOSD), thereby it is possible to obtain the stereoscopic image, not jumping out from the OSD. On the contrary, if WIN≤WOSD, no correction will be executed.

As the method of correction, i.e., for reducing the disparity of the input video, various ones are already known, as was mentioned above, including the methods [A] to [C], etc., and it is possible to apply any one of those methods.

Within the OSD superimpose portion, the disparity WOSD is provided on the OSD video, such as, the plane characters and/or pictures, etc., thereby adjusting a sense of depth of the OSD.

A value "WOUT" of the output maximum disparity signal is a signal, indicating the maximum value of the disparity in the jumping out direction on the output images L and R, and when displaying the OSD, it comes to WOSD, being the disparity of the OSD, and when not displaying the OSD, it comes to a value WIN of the maximum disparity signal of the input image.

There is also a merger limit in relation to the disparity in the drawing back direction, and it results into, if providing the disparity less than that, for example, generating the visual fatigue, easily, or forming no image. Assuming that the limit disparity is "f2" in the drawing back direction, and that the minimum disparity of the output image is "WADJ2", it is necessary to pay attention so that it does not come to WADJ2<f2 due to the correction. For example, in case where WADJ2<f2, as a result of correction with applying the method [A], after shrinking the video by the method [A], the video is moved in parallel by the method [B]; i.e., the value of the disparity is adjusted, totally, by combining the correction methods.

According to the present invention, with adopting such the structures of the embodiment as mentioned above, it is possible to achieve the following effects.

It is possible to reduce the case where the object on the input image can be seen in front than the OSD, and as a result, to lighten or reduce the visual fatigue.

Also, when displaying the OSD, it is possible to reduce the disparity of the input image, in the jumping out direction thereof, and thereby to display the OSD so that it can be seen in front than the solid body inputted.

Also, in case where the maximum disparity of the input image is set to be large in the jumping out direction thereof, it is not necessary to provide the position displaying the OSD in front, but not so much, and it results into lessening a load bearing on the eyes of the observer.

Also, with conducting the correction of the method [A], it is possible to make the disparity in the jumping out direction small, without changing sizes of the video.

Also, with conducting the correction of the method [B], it is possible to make the disparity in the jumping out direction small, by a free correction volume.

And also, with conducting the correction of the method [C], it is possible to bring the disparity down to be zero (0), irrespective of the disparity of the input image.

Also, in case when displaying the OSD on the display surface with treating the correction so that all of the stereoscopic images are shifted to the display surface, or into the depth side than the display surface, then the disparity of the OSD comes to zero (0), and thereby enabling to suppress the visual fatigue of the observer when she/he watches the OSD, carefully, down to the minimum.

Also, since the correction processes, such as, the methods [A] to [C], for example, and also the superimpose process of OSD are executed only by simple processes, such as, the parallel shifting or the shrinkage of the video, or exchanging of data path, for example, it can be achieved with a relatively simple hardware structure.

And also, with adjusting the correction volume depending on the maximum value of the disparity of the input image in the jumping out direction, the object on the input image cannot be seen in front than the OSD; thereby, disabling the visual fatigue to be generated.

### <Embodiment 2>

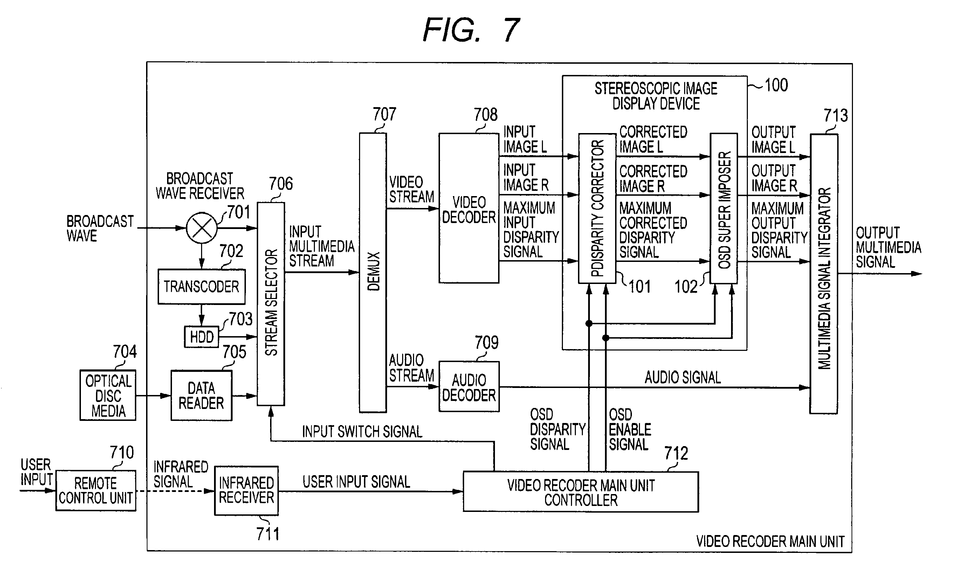

Fig. 7 is a block diagram for showing the structure of a video recorder including the stereoscopic image display device therein, according to a second embodiment of the present invention. This device picks up input video data, building up the stereoscopic image, from a broadcast wave received, a HDD (Hard Disc Drive) or an optical disc medium, for example, and after implementing the correction of disparity and the superimposing of OSD within the stereoscopic image display device, the output image is outputted to an outside of the video recorder main unit. Also, as the information attached on the output image, the output maximum disparity signal is outputted to the outside of the video recorder main unit.

The video recorder main unit is constructed with a stereoscopic image display device 100, a broadcast wave receiver 701, a trans-coder 702, a HDD 703, an optical disc medium 704, a data reader 705, a stream selector 706, a DEMUX 707, a video recorder 708, an audio recorder 709, a remote control unit 710, a video recorder main unit 711, and a video recorder main unit controller 712.

Explanation will be given on a method for exchanging a condition of displaying the OSD.

Herein, explanation will be given on the case where a menu screen of the recorder is superimposed, so as to display as the OSD. It is assumed that the characters and the video data to be displayed as the menu screen are recorded in the OSD superimposer. And, the OSD to be displayed may be video information, for example, a line of characters, captions or the like, such as, captions, program information, and/or an icon, etc., other than the menu screen.

The OSD display signals are recorded within the video recorder main unit controller, and just after turning an electric power source ON, it is in the condition of OSD display signal=0, i.e., the condition of not displaying OSD. When the user pushes down a "menu" button of the remote controller, it changes into OSD display signal=1, i.e., the condition of displaying the OSD. If she/he pushes down the menu button, once again, when OSD display signal=1, then it turns back to OSD display signal=0. The disparity in the jumping out direction, to be attached on the OSD, i.e., the OSD disparity signal is outputted from the video recorder main unit controller. The OSD disparity signal is made selectable from the menu screen, for the user with using the remote control unit.

When displaying the OSD, since the correction is made on the image, and if the input maximum disparity is transferred to a latter part or stage as it is, there may be a case where disturbance is generated on the display of equipment on the latter stage; thereby resulting into a problem. Then, the output maximum disparity signal is transferred to the equipment on the latter stage, including it within output multimedia signals.

In Fig. 7, although such structure is adopted that the output images L and R, the output maximum disparity and the audio signal are collected together, to be outputted to an outside, as an output multimedia signal; however, it may be in other structure of outputting them to the outside, actually, as individual independent signals.

According to the present invention, it is possible to obtain the following effects, with application of such structure of the embodiment as was mentioned above.

With an input by the user, it is possible to exchange the multimedia stream to be an input source.

Also, even during the time when displaying the OSD, it is possible to transfer the value of the correct maximum disparity to the equipment on the latter stage, and therefore it is possible to protect the equipment on the latter stage from the disturbance on the display.

### <Embodiment 3>

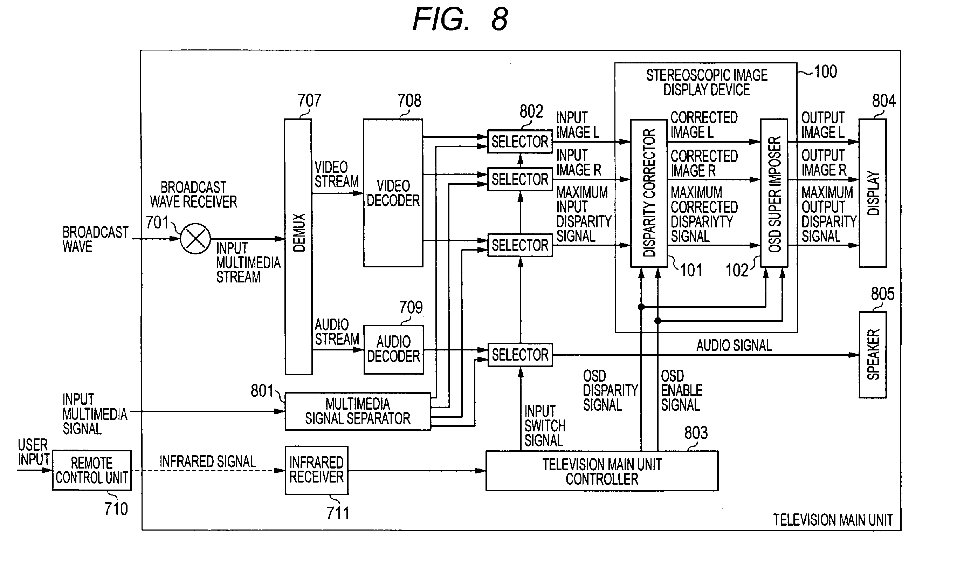

Fig. 8 is a block diagram for showing the structure of a television receiver including the stereoscopic image display device therein, according to a third embodiment of the present invention. This device picks up input video data, building up the stereoscopic image, from the broadcast wave received, or an input signal from an outside of that device, and after implementing the correction of disparity and the superimposing of OSD within the stereoscopic image display device, the video is displayed on a display. An input signal may be, for example, the output multimedia signal, which is outputted from the video recorder main unit according to the embodiment 2, and so on.

The television main unit is constructed with the stereoscopic image display device 100, the broadcast wave receiver 701, the DEMUX 707, the video recorder 708, the audio recorder 709, the remote control unit 710, and the main unit controller 711, and in addition thereto, a multimedia signal separator 801, a selector 802, a television main unit controller 803, a display 804 and a speaker 805.

Explanation will be given on a method for exchanging the display condition of the OSD. Herein, explanation will be given about the method for displaying a menu screen of the television as the OSD. The menu screen to be displayed in the present embodiment is superimposed, independent from the menu screen of the recorder, which was explained in the embodiment 2. A method of exchanging the display condition of the OSD is similar to that in the video recorder main unit according to the embodiment 2.

If enlarging an absolute value of the disparity, then the jumping out volume and the drawing back volume also become large, it is possible to cause the observer to sense the stereoscopic sense, strongly; however, actually, there is so-called a merger limit, and therefore, if the disparity is enlarged more than a certain degree, it results in that stereoscopy cannot be obtained, or generates the visual fatigue, etc. For that reason, it is necessary to adjust the disparity, fitting to the size of the display, on which the display is made. Then, according to the display shown in the present embodiment, with comparing the output maximum disparity signal and the merger limit, when displaying the output videos L and R thereon, adjustment is made on the disparity so that the disparity is not provided more than the merger limit.

According to the present invention, with such structure as was mentioned above, it is possible to obtain the following effects.

It is possible to exchange the video as the input source, the audio and the maximum disparity signal, at the same time, by the control from the remote control unit.

Also, during the time when displaying the OSD, it is possible to adjust to an appropriate disparity fitting to the display.

The present invention may be embodied in other specific forms without departing from the spirit or essential feature or characteristics thereof. The present embodiment(s) is/are therefore to be considered in all respects as illustrative and not restrictive, the scope of the invention being indicated by the appended claims rather than by the forgoing description and range of equivalency of the claims are therefore to be embraces therein.

## Claims

1. A stereoscopic image display device, for outputting left and right two (2) pieces of output videos, by superimposing an OSD (On Screen Display) on left and right two (2) pieces of output images, comprising:
a disparity correction portion, which is configured to correct disparity of said input images, thereby outputting corrected images; and
an OSD superimpose portion, which is configured to superimpose the OSD on each of said corrected image, thereby outputting output images, wherein
said disparity correction portion changes the disparity when filing up the OSD and when not.

2. The device of claim 1, wherein correction conducted within said disparity correction portion when superimposing the OSD is correction of shifting the input images in a horizontal direction, in parallel with, thereby to dispose, and outputting them as corrected images.

3. The device of claim 1, wherein correction conducted within said disparity correction portion when superimposing the OSD is correction of disposing shrink images obtained by shrinking the input images in the horizontal direction thereof, without changing positions of central lines, and outputting them as the corrected images.

4. The device of claim 2, wherein said each correction image has a region filled with a single color, such as, a black or a gray color, etc., or a specific pattern therein, other than an area(s) where the input image is disposed.

5. The device of claim 3, wherein said each corrected image has a region filled with a single color, such as, a black or a gray color, etc., or a specific pattern therein, other than an area(s) where the input image is disposed.

6. The device of claim 1, wherein correction in said disparity correction portion when superimposing the OSD is to produce one (1) piece of flat image from the left and right two (2) pieces of input images, and thereby outputting as left and right two (2) pieces of corrected images.

7. The device of claim 1, wherein such correction is made within said disparity correction portion, when displaying the OSD, that maximum disparity of a point image forming in front than a display surface comes to be smaller than the disparity of said OSD, on said corrected images.

8. The device of claim 7, wherein said correction is executed when the maximum disparity of the point image forming in front than the display surface is larger than the disparity of the OSD, on said input videos, and no correction is executed when it is not.

9. The device of claim 7, wherein output is made by using a value of either one, being larger between the maximum disparity of the point image forming in front than the display surface and the disparity of the OSD, on said corrected images, as a value of the maximum disparity of the point image forming in front than the display surface, on said output images.

10. The device of claim 1, which analysis the maximum disparity of an image forming in front than the display surface, from said input images, thereby adjusting a correction amount of said correction.

11. A recorder apparatus comprising the display device of claim 1, a broadcast wave receiver portion, a trains-coder portion, a HDD, an optical disc medium, a data reader, a stream selector, a DEMUX, a video decoder, an audio decoder, a video recorder main unit and a multimedia signal integrator.

12. A television apparatus comprising the display device of claim 1, a broadcast wave receiver, a DEMUX, a video decoder, an audio decoder, a multimedia signal separator, a selector, a television main unit, a display and a speaker.
